# EUROPEAN PATENT SPECIFICATION

(11) **EP 1 620 993 B1**
(45) Date of publication and mention of the grant of the patent: **24.01.2007**
(21) Application number: 04728887.3
(22) Date of filing: 22.04.2004
(51) Int. Cl.: H04L 29/06, G06F 1/00

(54) **CLASS-BASED CONTENT TRANSFER BETWEEN DEVICES**
KLASSENBASIERTE INHALTSÜBERTRAGUNG ZWISCHEN GERÄTEN
TRANSFERT DE CONTENUS ENTRE DISPOSITIFS EN FONCTION DE LA CATEGORIE

(30) Priority: 24.04.2003 EP 03101122
(43) Date of publication of application: 01.02.2006
(73) Proprietor: Koninklijke Philips Electronics N.V., 5621 BA Eindhoven (NL)
(72) Inventor: KOERBER, Eric, J., B., NL-5656 AA Eindhoven (NL)
(74) Representative: Groenendaal, Antonius W. M.
(86) International application number: PCT/IB2004/050488
(87) International publication number: WO 2004/095797

(56) References cited:
- WO-A-00/21241
- WO-A-03/034408
- US-B1- 6 226 793
- HEUVEL VAN DEN S A F A ET AL: "Secure Content Management in Authorised Domains" 15 September 2002 (2002-09-15), INTERNATIONAL BROADCASTING CONVENTION, XX, XX, PAGE(S) 467-474 , XP002273504 Authorised domain model which permits the consumer to acces and dinstribute contents within the AD and protects at the same time the rights of the owner. the whole document

## Description

The present invention relates to a method and a system for distributing information from a distributing device to a receiving device, wherein each device has been assigned a respective level of information distribution authorization.

In recent years, the number of content protection systems has grown in a rapid pace. Some of these systems only protect the content against illegal copying, while others also prohibit the user to access the content. The first category is called Copy Protection (CP) systems. CP systems have traditionally been the main focus for consumer electronics (CE) devices, as this type of content protection is thought to be cheaply implemented and does not need bi-directional interaction with the content provider. Some examples are the Content Scrambling System (CSS), the protection system of DVD ROM discs and DTCP, the protection system for IEEE 1394 connections.

International application WO 00/21241 discloses a method of transfer of copy-protected content between a source device and a sink device that includes a step of verifying the identity of a source and a sink device, preferably using certificates. WO 00/21241 provides a system and a method for ensuring the availability of certificates for use in creating a secure connection between two devices when conducting the method of transfer of copy-protected content in such a transfer.

The second category is known under several names. In the broadcast world, systems of this category are generally known as Conditional Access (CA) systems, while in the Internet world they are generally known as Digital Rights Management (DRM) systems.

US patent 6,226,793 provides an apparatus for providing conditional access, in that it enables rating level control of the viewing of a program. The apparatus comprising a device for entering a rating level for controlling the viewing of a program, a device for extracting rating data, a device for extracting plot-related text data from the program, a device for blocking the playing of a program, and a device for substituting the extracted plot-related text data.

Some types of CP systems can also provide services to interface CA or DRM systems. Examples are the systems currently under development by the DVB-CPT subgroup and the TV-Anytime RMP group. The goal is a system in which a set of devices can authenticate each other through a bi-directional connection. Based on this authentication, the devices will trust each other and this will enable/allow them to exchange protected content. The accompanying licenses describe which rights the user has and what operations he is allowed to perform on the content. The license is protected by means of some general network secret, which is only exchanged between the devices within a certain household. This network of devices is called an Authorized Domain (AD).

In the publication "Secure content management in authorised domains", Int. Broadcasting Convention (IBC). Amsterdam, The Netherlands. pp. 467-474, S.A.F.A van den Heuvel, et al. present requirements, an information model, and an architecture for a specific AD realisation.

The concept of authorized domains tries to find a solution that both serve the interests of the content owners (that want protection of their copyrights) and the content consumers (that want unrestricted use of the content). The basic principle is to have a controlled network environment in which content can be used relatively freely as long as it does not cross the border of the authorized domain. Typically, authorized domains are centered around the home environment, also referred to as home networks. Of course, other scenarios are also possible. A user could for example take a portable television with him on a trip, and use it in his hotel room to access content stored on his Personal Video Recorder at home. Even though the portable television is outside the home network, it is a part of the user's authorized domain.

A home network can be defined as a set of devices that are interconnected using some kind of network technology (e.g. Ethernet, IEEE 1394, BlueTooth, 802.11b etc). Although network technology allows the different devices to communicate, this is not enough to allow devices to interoperate. To be able to do this, devices need to be able to discover and address the functions present in the other devices in the network. Such interoperability is provided by home networking middleware (HN-MW). Examples of home networking middleware are Jini, HAVi, UPnP, AVC.

The concept of Multilevel Security (MLS) is often used in networks to enable different levels of security within the networks. Information with different classification levels are distributed within a network and users comprised in the network have different security clearances and authorizations regarding the classified information. By means of this concept, users can be prevented from accessing information for which they are not authorized.

A problem in prior art, which problem the present invention aims at solving, is that it is generally considered difficult to prevent unauthorized consumers from duplicating and/or distributing copyrighted digital content. Thus, the problem has the effect that it is difficult to protect the rights of a creator of copyrighted digital content as well as the rights of a content provider distributing the content. The problem can of course be mitigated by employing copy protection, but then another problem arises, namely that if a user has content on one device, the user is not able to copy it to a another device of which he is the sole user.

An object of the present invention is to provide a method and a system for straightforward and simple, yet effective, protection of copyrighted digital content such that the content cannot easily be duplicated and/or distributed to users and devices not being authorized to access the digital content. Still, an authorized user should be offered some flexibility in that it shall be possible to copy content to personal devices employed by a limited number of users.

This object is achieved by a method for distributing information from a distributing device to a receiving device, wherein each device has been assigned a respective level of information distribution authorization according to claim 1 and a system for distributing information from a distributing device to a receiving device, wherein each device has been assigned a respective level of information distribution authorization according to claim 10. Preferred embodiments are defined by the dependent claims.

According to a first aspect of the invention, a method is provided in which a level of information distribution authorization is denoted by means of a class number assigned to a device. When distribution of information is to be effected from the distributing device to the receiving device, the class number of the receiving device is verified. If the receiving device has a lower class number than the distributing device, information is distributed from the distributing device to the receiving device.

According to a second aspect of the invention, a system is provided in which each device in the system has been assigned a respective level of information distribution authorization by means of a class number. A distributing device contained in the system is arranged with means for verifying, when distribution of information is to be effected from the distributing device to a receiving device in the system, the class number of the receiving device. The distributing device is further arranged with means for distributing information to the receiving device if the receiving device has a lower class number than the distributing device.

The idea of the invention is that a device is assigned a level of information distribution authorization in the form of a class number. Preferably this class number represents the number of potential users that has access to the device. For example, a personal MP3 player has fewer potential users than a CD player accessible to all members of a home network. This implies that the CD player has a higher class number than the MP3 player. Whether a higher class number indicates a larger number of users is a question of definition and, if desirable, a high class number could be chosen to indicate a low number of users. However, throughout this description, the higher the class number, the larger the number of potential users. This will not limit the invention in any way, as it is clear that both definitions given above regarding classification is possible. When information in the form of copyrighted digital content is to be transferred from a distributing device to a receiving device, the distributing device verifies the class number of the receiving device. If the receiving device has a lower class number than the distributing device, the distributing device is allowed to transfer the content to the receiving device.

The present invention is advantageous, since it offers protection of copyrighted digital content on one hand and flexibility for an authorized user on the other. Content can be copied and distributed, but only in such a way that the copy is distributed to a device having a lower class number than the distributing device. The lower class number indicates that the device is intended to be used by a more limited number of users. It is only possible to distribute content to a receiving device having a lower class number than the distributing device. A CD player can, for example, be given class number 2 and a personal MP3 player class number 1. This allows a user to copy content to a smaller device for personal use. This does not harm the content creator and/or the content provider, and it gives the user some degree of flexibility.

According to an embodiment of the invention, when assigning a class number to a device, the ability of the device to distribute information to other devices is considered. The easier it is for the device to transfer information to another device, the higher the class number. This is advantageous, since even though a device has a low number of potential users, the device, or a sub device contained in the device, might have the ability to spread information in an easy manner. For example, a PC might have a rather limited number of potential users. However, a network card contained in the PC connected to the Internet can be used to rapidly broadcast information worldwide. The network card can thus be given a high class number while a personal hard disk in the same PC is given a low class number. By using the classification for the network card and the hard disk comprised in the PC, it is possible for a user to copy content to the hard disk, but not to transfer it from the hard disk to the network card connected to the Internet.

According to another embodiment of the present invention, for a device to qualify itself as an information recipient or distributor, the device must be assigned a digitally signed class number. By using the signed class number as an identifier, it is not possible for ill-intentioned third parties to introduce unauthorized devices, since the device is authorized by means of the digital signature.

According to yet further embodiments of the invention, the assignment of a class number to a device can either be performed by a device manufacturer, or a subcontractor authorized by the manufacturer, or by a home network supervisor, in which home network the device is to be comprised. If the assignment is made by the manufacturer, security against attacks from malicious third parties can be assumed to be higher, since the authority to handle for example class numbers and encryption/decryption keys is not spread out over several parties, thereby reducing the risk of sensitive information leakage. On the other hand, if the network supervisor is allowed to handle the assignment, the network becomes a lot more flexible.

Further features of, and advantages with, the present invention will become apparent when studying the appended claims and the following description. Those skilled in the art realize that different features of the present invention can be combined to create embodiments other than those described in the following. Many different alterations, modifications and combinations will become apparent for those skilled in the art. The described embodiments are therefore not intended to limit the scope of the invention, as defined by the appended claims.

A detailed description of embodiments of the present invention will be given in the following with reference made to the accompanying drawings, in which;
Fig. 1 schematically shows a system comprising devices interconnected via a network, in which system the present invention advantageously can be applied;
Fig. 2 schematically shows a CE device implementing an embodiment of the present invention;
Fig. 3 schematically shows an embodiment of the present invention when content is transferred from a distributing device to a receiving device; and
Fig. 4 shows a flow chart of an embodiment of the method according to the present invention.

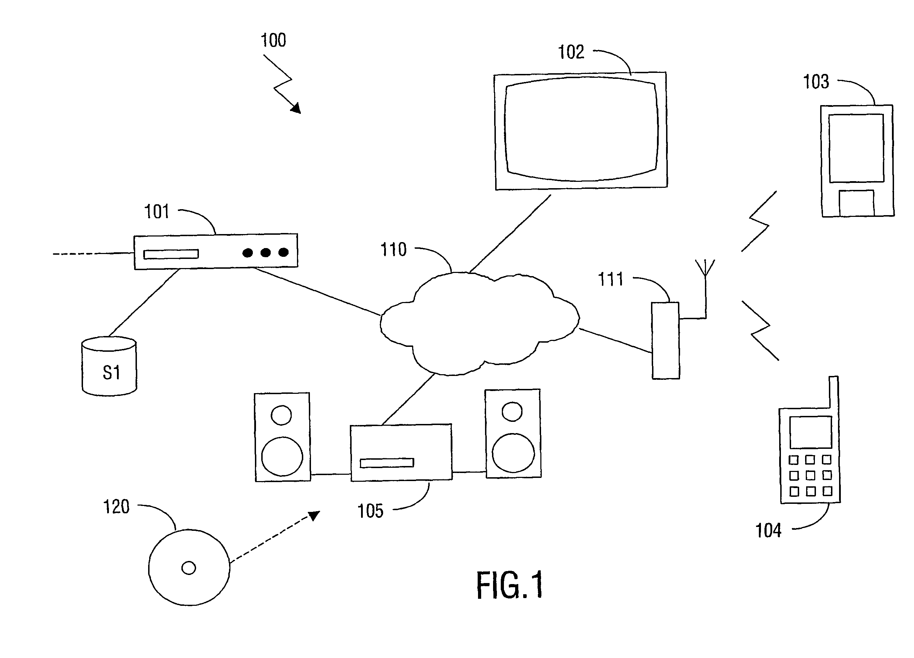

Fig. 1 schematically shows a system 100 comprising devices 101-105 interconnected via a network 110. In this embodiment, the system 100 is an in-home network. Note the system embodies other types of networks as well, such as networks in large-scale enterprises or university networks, a typical digital home network includes a number of devices, e.g. a radio receiver, a tuner/decoder, a CD player, a pair of speakers, a television, a VCR, a tape deck, and so on. These devices are usually interconnected to allow one device, e.g. the television, to control another, e.g. the VCR. One device, such as the tuner/decoder or a set top box (STB), is usually the central device, providing central control over the others.

Content, which typically comprises things like music, songs, movies, TV programs, pictures, books and the like, but which also includes interactive services, is received through a residential gateway or set top box 101. Content could also enter the home via other sources, such as storage media as discs or via portable devices. The source could be a connection to a broadband cable network, an Internet connection, a satellite downlink etc. The content can then be transferred over the network 110 to a sink for rendering. A sink can be, for instance, the television display 102, the portable display device 103, the mobile phone 104 and/or the audio playback device 105.

The exact way in which a content item is rendered depends on the type of device and the type of content. For instance, in a radio receiver, rendering comprises generating audio signals and feeding them to loudspeakers. For a television receiver, rendering generally comprises generating audio and video signals and feeding those to a display screen and loudspeakers. For other types of content a similar appropriate action must be taken. Rendering may also include operations such as decrypting or descrambling a received signal, synchronizing audio and video signals and so on.

The set top box 101, or any other device in the system 100, may comprise a storage medium S1 such as a hard disk, allowing the recording and later playback of received content. The storage medium S1 could be a Personal Digital Recorder (PDR) of some kind, for example a DVD+RW recorder, to which the set top box 101 is connected. Content can also enter the system 100 stored on a carrier 120 such as a CD a DVD.

The portable display device 103 and the mobile phone 104 are connected wirelessly to the network 110 using a base station 111, for example using Bluetooth or IEEE 802.11b. The other devices are connected using a conventional wired connection. To allow the devices 101-105 to interact, several interoperability standards are available, allowing different devices to exchange messages and information and to control each other. One well-known standard is the Home Audio/Video Interoperability (HAVi) standard, version 1.0. Other well-known standards are the domestic digital bus (D2B) standard, a communications protocol described in IEC 1030 and Universal Plug and Play.

It is important to ensure that the devices 101-105 in the home network do not make unauthorized copies of the content. To do this, a security framework, typically referred to as a DRM system, is necessary. In one such framework, complying with the features of the present invention, each device in the network is assigned a class number representing the number of potential users that has access to the device. For example, the personal portable display device 103 has fewer potential users than the set top box 101 accessible to all members of the home network. This implies that the set top box 101 has a higher class number than the display device 103. When information in the form of copyrighted digital content is to be transferred from a distributing device, e.g. the set top box 101, to a receiving device, e.g. the personal portable display device 103, the distributing device verifies the class number of the receiving device. In this case, the receiving device has a lower class number than the distributing device, so the set top box 101 is allowed to transfer the content to the personal portable display device 103. If the device 103 was to try to transfer content to the set top box 101, the device 103 would not be allowed to do so, since the set top box 101 has a higher class number than the device 103.

Using this framework, as will be described in the following, cryptographical operations will be employed in connection with content distribution. The devices can authenticate each other and distribute content securely by means of encrypting the content. This prevents unprotected content from leaking "in the clear" to unauthorized devices and data originating from untrusted devices to enter the system.

It is important that devices only distribute content to other devices which they have successfully authenticated beforehand. This ensures that an adversary cannot make unauthorized copies using a malicious device. A device will only be able to successfully authenticate itself if it was built by an authorized manufacturer or an authorized subcontractor, for example because only authorized manufacturers know a particular secret necessary for successful authentication, or their devices are set-up by a trusted network supervisor.

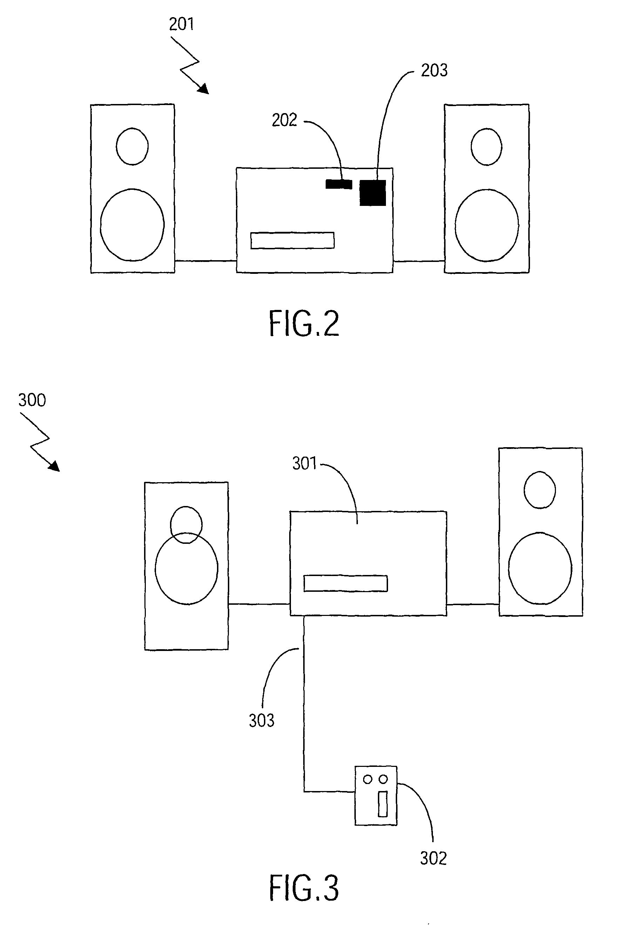

Fig. 2 schematically shows a CE device in the form of an audio playback device 201 implementing an embodiment of the present invention. The playback device 201 contains a CPU 202 or an equivalent device with processing capabilities, such as a programmable logic device (PLD), an application specific integrated circuit (ASIC) or the like. The device 201 also contains a storage device 203 in the form of a memory for storing software required to perform cryptographical operations and for storing data such as class numbers and cryptographical keys. It should be realized that all devices are required to comprise processing capabilities and storage devices in order to implement the invention.

In production, the device 201 is assigned a class number representing the number of potential users having access to the device. According to an embodiment of the invention, when assigning the class number to the device, the ability of the device to distribute information is also taken into account. Preferably, the class number is encrypted with a private, asymmetric key of the device 201, which attaches a digital signature to the class number. A criteria known as non-repudiation is then satisfied, i.e. the sender of the information cannot at a later stage deny the information transmission. Alternatively, the class number is encrypted using a symmetric key, in which case authentication is provided. Note that the asymmetric encryption procedure goes one step beyond the symmetric encryption procedure in that it, in addition to providing authentication, also provides non-repudiation. The providing of authentication and/or non-repudiation can be done using powerful standard algorithms, such as the Triple Data Encryption Standard (3-DES) algorithm, the Advanced Encryption Standard (AES) algorithm or the International Data Encryption Algorithm (IDEA) for symmetric encryption and, for example, the Diffie-Hellman (DH) algorithm or the Rivest-Shamir-Adleman (RSA) algorithm for asymmetric encryption. This ensures another device communicating with the device 201 that the class number of has been issued by a trusted manufacturer.

As mentioned earlier, the actual assignment of a class number to a device can be performed by an authorized subcontractor or a trusted network supervisor. When considering who to make the actual assignment, a tradeoff has to be made between system security on the one hand and flexibility on the other. If the assignment is made by the manufacturer, the security against attacks by malicious third parties can be assumed to be higher, since the task of handling for example class numbers and encryption/decryption keys is performed by one party. On the other hand, if the network supervisor is allowed to handle the assignment, the network becomes a lot more flexible, since the supervisor most likely knows the network and the devices included therein. Who actually performs the assignment of class numbers is an agreement which must be concluded by the device manufacturer, the network owner and possibly the provider of copyrighted content.

Fig. 3 schematically shows an embodiment of a system 300 according to the present invention. In Fig. 3, content is to be transferred from a distributing device 301 to a receiving device 302. A connection 303 is established between the distributing device, in this case an audio playback device 301, and the receiving device, in Fig. 3 a portable MP3 player 302. The connection 303 consists in this specific embodiment of a cable intended for transportation of MP3 files. In other envisaged embodiments, the distributing device and the receiving device might be devices incorporating radio receivers, in which case the connection 303 might be established using RF.

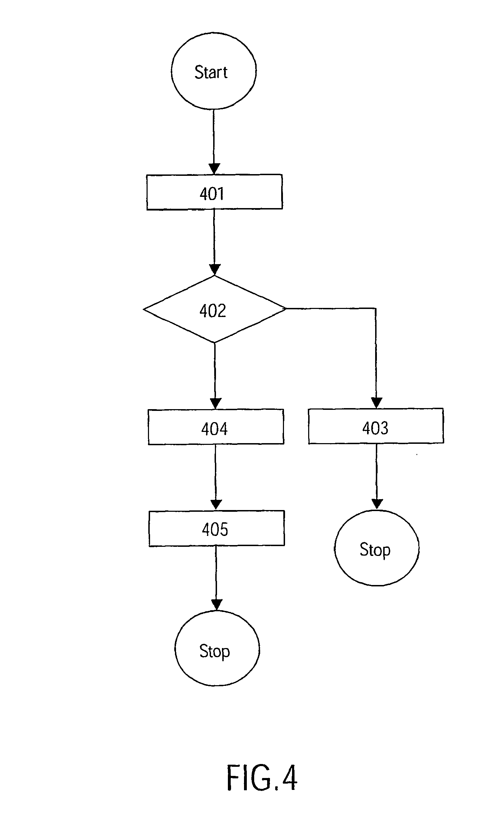

Fig. 4 shows a flow chart of an embodiment of the method according to the present invention. In step 401, when connection has been established between the distributing device (DD) and the receiving device (RD), the CPU (not shown) of the DD executes appropriate software to verify the class number of the RD. This is performed by means of decrypting the encrypted class number. The encryption is performed with a symmetric key shared by the DD and the RD, or a public key which corresponds to the private key of the RD, depending on which type of encryption that is employed. The distribution of keys can be handled by the device manufacturer, but as in the case with assignment of the class numbers, this can possibly be done by an authorized subcontractor or a trusted network supervisor, or a trusted third party. In step 402, the DD decides whether the class number of the RD is lower than its own class number. If the class number of the RD is equal to, or higher than, the class number of the DD, the method terminates at step 403 and no transmission of content from the DD to the RD will be effected.

If, in step 402, the DD decides that the class number of the RD is lower than its own class number, the method continues to step 404, wherein the DD distributes copyrighted content to the RD. Depending on the level of security deemed necessary in the system, the content can be encrypted at the DD in connection with being distributed, thereby providing the content with confidentiality. Alternatively, the content has been encrypted beforehand. The encryption is either performed with a symmetric key shared by the DD and the RD or with a public key corresponding to a private key of the RD. If the content is encrypted, the RD will decrypt it at step 405. In analogy with the encryption, the content is either decrypted with the symmetric key shared by the DD and the RD or with the private key of the RD, which private key corresponds to the public key used in the encryption. In step 405, after the decryption, the content is in plaintext, and the RD is free to access it.

Alternatively, a separate verification device (not shown) can be arranged to perform the verification of class numbers, whereby a great deal of processing load is transferred from the receiving device to the verification device. The verification device can also store and distribute keys used in connection to the cryptographic operations. This can be advantageous if a network comprises many receiving and distributing devices, since the distributing devices can be less complex. In large-scale networks, a number of verification devices can be arranged.

According to yet another embodiment of the present invention, the content distributed from a distributing device to a receiving device is subject to watermarking. This is preferably performed at the content distributor or the device manufacturer or in cooperation between these two actors. By performing a watermarking operation on a class number and inserting the watermarked class number into the content, it is possible to specify the highest class number that a device can have and still be allowed to receive the watermarked content. If a malicious third party procures a device with a high class number, this third party can distribute content to a great number of other devices. By using watermarks, the content itself decides if it can be distributed to a receiving device. Assuming that a certain content is assigned the watermarked class number 3 and a receiving device has class number 4, it is not possible to distribute the content to the device. In fact, it is not possible to distribute the content to a device having a class number that is higher than the watermarked class number comprised in the content. The watermarked class number is validated by a device CPU executing appropriate software.

Watermarking is advantageous, since illegally owning a device with a high classification in order to broadcast copyrighted content becomes useless, because the content itself determines by means of the watermarking operation at which level it can be introduced in a network of classified devices.

It should be noted that the above mentioned embodiments exemplify the invention, and that those skilled in the art will be able to design many alternative embodiments without departing from the scope of the appended claims. For example, class numbers could be assigned based on how expensive a device is, or classes could be assigned based on certain properties of the devices in a class. One embodiment of this option could be to use class '2' for servers, class '1' for stationary devices and class '0' for mobile devices.

The word "comprising" does not exclude the presence of elements or steps beyond those listed in a claim. The word "a" or "an" preceding an element does not exclude the presence of a plurality of such elements. In the system claims enumerating several means, several of these means can be embodied by one and the same item of hardware.

## Claims

1. A method for distributing information from a distributing device (301) to a receiving device (302), wherein each device has been assigned a respective level of information distribution authorization, and where a level of information distribution authorization is denoted by means of a class number; the method comprising the steps of:
verifying (401), when distribution of information is to be effected from the distributing device (301) to the receiving device (302), the class number of the receiving device (302); and
distributing (404) information from the distributing device (301) to the receiving device (302) if the receiving device (302) has a lower class number than the distributing device (301).

2. The method according to claim 1, wherein the class number assigned to each of the distributing device (301) and the receiving device (302) respectively corresponds to the ability to distribute information from said respective device to another device, a lower class number indicating a lower ability to distribute (404) information.

3. The method according to any one of claim 1 or 2, wherein at least part of the information to be distributed (404) from the distributing device (301) to the receiving device (302) is encrypted such that said receiving device (302) is able to decrypt the encrypted information if the receiving device (302) has a lower class number than the distributing device (301).

4. The method according to any one of the preceding claims, wherein the distributing device (301) and the receiving device (302) must be assigned a digitally signed class number to qualify itself as an information distributor and receiver.

5. The method according to any one of the preceding claims, wherein the devices (301, 302) are arranged in a home network (100).

6. The method according to claim 5, wherein the class numbers are assigned to the devices (301, 302) by a home network supervisor.

7. The method according to any one of claims 1-5, wherein the class numbers are assigned to the devices (301, 302) by a device manufacturer.

8. The method according to any one of the preceding claims, wherein different sub devices contained in either one of the distributing device (301) and the receiving device (302) can be assigned different class numbers.

9. The method according to any of the preceding claims, wherein the information to be distributed from the distributing device (301) to the receiving device (302) is provided with a watermarked class number, the watermarked class number specifying the highest class number that the receiving device (302) can have and still be allowed to receive the information.

10. A system (300) for distributing information from a distributing device (301) to a receiving device (302), wherein
each device (301, 302) has been assigned a respective level of information distribution authorization which is denoted by means of a class number;
the distributing device (301) is arranged with means (202, 203) for verifying, when distribution of information is to be effected from the distributing device (301) to the receiving device (302), the class number of the receiving device (302); and
the distributing device (301) is arranged with means (202) for distributing information to the receiving device (302) if the receiving device (302) has a lower class number than the distributing device (301).

11. The system (300) according to claim 10, wherein the class number assigned to each of the distributing device (301) and the receiving device (302) respectively moreover corresponds to the ability to distribute information from said respective device to another device, a lower class number indicating a lower ability to distribute information.

12. The system (300) according to any one of claim 10 or 11, wherein the distributing device (301) is arranged to encrypt at least part of the information to be distributed from the distributing device (301) to the receiving device (302) such that said receiving device (302) is able to decrypt the encrypted information, if the receiving device (302) has a lower class number than the distributing device (301).

13. The system (300) according to any one of claims 10-12, wherein the distributing device (301) and the receiving device (302) is arranged with a digitally signed class number to qualify itself as an information distributor and receiver.

14. The system (300) according to any one of claims 10-13, wherein the devices (301, 302) are arranged in a home network (100).

15. The system according to claim 14, wherein the class numbers are assigned to the devices (301, 302) by a home network supervisor.

16. The system according to any one of claims 10-14, wherein the class numbers are assigned to the devices (301, 302) by a device manufacturer.

17. The system according to any one of claims 10-16, wherein different sub devices contained in either one of the distributing device (301) and the receiving device (302) can be assigned different class numbers.

18. The system according to any one of claims 10-17, wherein the information to be distributed from the distributing device (301) to the receiving device (302) is provided with a watermarked class number, the watermarked class number specifying the highest class number that the receiving device (302) can have and still be allowed to receive the information.

## Patentansprüche

1. Verfahren zum Verteilen von Information von einer Verteilungsanordnung (301) zu einer Empfangsanordnung (302), wobei jede Anordnung einem bestimmten Pegel der Informationsverteilungsautorisation zugeordnet ist, und wobei ein Pegel der Informationsverteilungsautorisation mit Hilfe einer Klassennummer bezeichnet wird; wobei das Verfahren die nachfolgenden Verfahrensschritte umfasst:
- das Überprüfen (401) der Klassennummer der Empfangsanordnung (302), wenn die Verteilung von Information aus der Verteilungsanordnung (301) zu der Empfangsanordnung (302) effektuiert werden soll; und
- das Verteilen (404) der Information aus der Verteilungsanordnung (301) zu der Empfanganordnung (302), wenn die Empfangsanordnung (302) eine niedrigere Klassennummer hat als die Verteilungsanordnung (301).

2. Verfahren nach Anspruch 1, wobei die jeder Anordnung der Verteilungsanordnung (301) und der Empfangsanordnung (302) zugeordnete Klassennummer der Fähigkeit entspricht, Information von der genannten betreffenden Anordnung zu einer anderen Anordnung zu verteilen, wobei eine niedrigere Klassennummer eine geringere Fähigkeit zum Verteilen (404) von Information angibt.

3. Verfahren nach einem der Ansprüche 1 oder 2, wobei wenigstens ein Teil der von der Verteilungsanordnung (301) zu der Empfangsanordnung (302) zu verteilenden (401) Information derart verschlüsselt ist, dass die genannte Empfangsanordnung (302) imstande ist, die verschlüsselte Information zu entschlüsseln, wenn die Empfangsanordnung (302) eine niedrigere Klassennummer hat als die Verteilungsanordnung (301).

4. Verfahren nach einem der vorstehenden Ansprüche, wobei die Verteilungsanordnung (301) und die Empfangsanordnung (302) einer digital unterzeichneten Klassennummer zugeordnet werden muss, um sich selbst als Informationsverteiler und -empfänger zu qualifizieren.

5. Verfahren nach einem der vorstehenden Ansprüche, wobei die Anordnung (301, 302) in einem Heimnetzwerk (100) vorgesehen sind.

6. Verfahren nach Anspruch 5, wobei die Klassennummern von einem Heimnetzwerkverwalter den Anordnungen (301, 302) zugeordnet werden.

7. Verfahren nach einem der Ansprüche 1 - 5, wobei die Klassennummern von einem Hersteller den Anordnungen (301, 302) zugeordnet werden.

8. Verfahren nach einem der vorstehenden Ansprüche, wobei verschiedene Unteranordnungen in de Verteilungsanordnung (301) oder in der Empfangsanordnung (302) verschienen Klassennummern zugeordnet werden können

9. Verfahren nach einem der vorstehenden Ansprüche, wobei die von der Verteilungsanordnung (301) zu der Empfangsanordnung (302) zu verteilende Information mit einer Wasserzeichen-Klassennummer versehen ist, wobei die Wasserzeichen-Klassennummer die höchste Klassennummer spezifiziert, welche die Empfangsanordnung (302) haben kann und dennoch die Information empfangen dürfen.

10. System (300) zum Verteilen von Information von einer Verteilungsanordnung (301) zu einer Empfangsanordnung (302), wobei:
- jeder Anordnung (301, 302) ein betreffender Informationsverteilungsautorisationspegel zugeordnet ist, der mit Hilfe einer Klassennummer bezeichnet wird,
- die Verteilungsanordnung (301) mit Mitteln (202, 203) versehen ist um die Klassennummer der Empfangsanordnung (302) zu überprüfen, wenn die Verteilung von Information von der Verteilungsanordnung (301) zu der Empfangsanordnung (302) effektuiert wird; und
- die Verteilungsanordnung (301) mit Mitteln (202) versehen ist zum Verteilen von Information zu der Empfangsanordnung (302), wenn d Empfangsanordnung (302) eine niedrigere Klassennummer als die Verteilungsanordnung (301) hat.

11. System (300) nach Anspruch 10, wobei die jeder Anordnung der Verteilungsanordnung (301) und der Empfangsanordnung (302) zugeordnete Klassennummer weiterhin der Fähigkeit entspricht um Information von der genannten Anordnung zu einer anderen Anordnung zu verteilen, wobei eine niedrigere Klassennummer eine geringere Fähigkeit zum Verteilen von Information angibt.

12. System (300) nach einem der Ansprüche 10 oder 11, wobei die Verteilungsanordnung (301) dazu vorgesehen ist, wenigstens einen Teil der von der Verteilungsanordnung (301) zu der Empfangsanordnung (302) zu verteilenden Information zu verschlüsseln, so dass die genannte Empfangsanordnung (302) imstande ist, die verschlüsselte Information zu entschlüsseln, wenn die Empfangsanordnung (302) eine niedrigere Klassennummer hat als die Verteilungsanordnung (30).

13. System (300) nach einem der Ansprüche 10 - 12, wobei die Verteilungsanordnung (301) und die Empfangsanordnung (302) mit einer digital unterschriebenen Klassennummer versehen ist um sich selber als einen Informationsverteiler und -empfänger zu qualifizieren.

14. System (300) nach einem der Ansprüche 10 - 13, wobei die Anordnungen (301, 302) in einem Heimnetzwerk (100) vorgesehen sind.

15. System nach Anspruch 14, wobei die Klassennummern den Anordnungen (301, 302) von einem Heimnetzwerkverwalter zugeordnet werden.

16. System nach einem der Ansprüche 10 - 14, wobei die Klassennummern den Anordnungen (301, 302) von einem Gerätehersteller zugeordnet werden.

17. System nach einem der Ansprüche 10-16, wobei verschiedenen Unteranordnungen in den beiden Anordnungen, und zwar der Verteilungsanordnung (301) und der Empfangsanordnung (302) verschiedene Klassennummern zugeordnet werden können.

18. System nach einem der Ansprüche 10 - 17, wobei die von der Verteilungsanordnung (301) zu der Empfangsanordnung (302) zu verteilende Information mit einer Wasserzeichenklassennummer versehen ist, wobei diese Wasserzeichenklassennummer die höchste Klassennummer spezifiziert, welche die Empfangsanordnung (302) haben kann und dennoch die Information empfangen darf.

## Revendications

1. Procédé destiné à distribuer des informations d'un dispositif de distribution (301) à un dispositif de réception (302), dans lequel il est attribué à chaque dispositif un niveau respectif d'autorisation de distribution d'informations, et dans lequel un niveau d'autorisation de distribution d'informations est indiqué au moyen d'un numéro de classe; le procédé comprenant les étapes pour :
vérifier (401), lorsque la distribution d'informations doit être exécutée du dispositif de distribution (301) au dispositif de réception (302), le numéro de classe du dispositif de réception (302), et
distribuer (404) des informations du dispositif de distribution (301) au dispositif de réception (302) si le dispositif de réception (302) présente un numéro de classe inférieur à celui du dispositif de distribution (301).

2. Procédé suivant la revendication 1, dans lequel le numéro de classe attribué à chacun du dispositif de distribution (301) et du dispositif de réception (302) correspond respectivement à la capacité à distribuer des informations dudit dispositif respectif à un autre dispositif, un numéro de classe inférieur indiquant une capacité inférieure pour distribuer (404) des informations.

3. Procédé suivant l'une quelconque des revendications 1 ou 2, dans lequel au moins une partie des informations à distribuer (404) du dispositif de distribution (301) au dispositif de réception (302) est chiffrée, de sorte que ledit dispositif de réception (302) est en mesure de déchiffrer les informations chiffrées si le dispositif de réception (302) présente un numéro de classe inférieur à celui du dispositif de distribution (301).

4. Procédé suivant l'une quelconque des revendications précédentes, dans lequel le dispositif de distribution (301) et le dispositif de réception (302) doivent recevoir un numéro de classe à signature numérique pour se qualifier comme distributeur ou récepteur d'informations.

5. Procédé suivant l'une quelconque des revendications précédentes, dans lequel les dispositifs (301, 302) sont agencés dans un réseau domestique (100).

6. Procédé suivant la revendication 5, dans lequel les numéros de classe sont attribués aux dispositifs (301, 302) par un superviseur de réseau domestique.

7. Procédé suivant l'une quelconque des revendications 1 à 5, dans lequel les numéros de classe sont attribués aux dispositifs (301, 302) par un fabricant de dispositif.

8. Procédé suivant l'une quelconque des revendications précédentes, dans lequel il peut être attribué des numéros de classe différents à différents sous-dispositifs contenus dans l'un ou l'autre des dispositif de distribution (301) et dispositif de réception (302).

9. Procédé suivant l'une quelconque des revendications précédentes, dans lequel les informations à distribuer d'un dispositif de distribution (301) au dispositif de réception (302) sont dotées d'un numéro de classe en filigrane, le numéro de classe en filigrane spécifiant le numéro de classe le plus élevé que le dispositif de réception (302) peut avoir tout en étant encore autorisé à recevoir les informations.

10. Système (300) destiné à distribuer des informations d'un dispositif de distribution (301) à un dispositif de réception (302), dans lequel
il est attribué à chaque dispositif (301, 302) un niveau respectif d'autorisation de distribution d'informations qui est indiqué au moyen d'un numéro de classe;
le dispositif de distribution (301) est doté de moyens (202,203) destinés à vérifier le numéro de classe du dispositif de réception (302), lorsque la distribution d'informations doit être réalisée du dispositif de distribution (301) au dispositif de réception (302), et
le dispositif de distribution (301) est doté de moyens (202) destinés à distribuer des informations au dispositif de réception (302) si le dispositif de réception (302) présente un numéro de classe inférieur à celui du dispositif de distribution (301).

11. Système (300) suivant la revendication 10, dans lequel le numéro de classe attribué à chacun du dispositif de distribution (301) et du dispositif de réception (302) correspond en outre respectivement à la capacité à distribuer des informations dudit dispositif respectif à un autre dispositif, un numéro de classe inférieur indiquant une capacité inférieure pour distribuer des informations.

12. Système (300) suivant l'une quelconque des revendications 10 ou 11, dans lequel le dispositif de distribution (301) est apte à chiffrer au moins une partie des informations à distribuer du dispositif de distribution (301) au dispositif de réception (302), de sorte que ledit dispositif de réception (302) est en mesure de déchiffrer les informations chiffrées si le dispositif de réception (302) présente un numéro de classe inférieur à celui du dispositif de distribution (301).

13. Système (300) suivant l'une quelconque des revendications 10 à 12, dans lequel le dispositif de distribution (301) et le dispositif de réception (302) sont dotés d'un numéro de classe à signature numérique afin de se qualifier comme distributeur ou récepteur d'informations.

14. Système (300) suivant l'une quelconque des revendications 10 à 13, dans lequel les dispositifs (301, 302) sont agencés dans un réseau domestique (100).

15. Système suivant la revendication 14, dans lequel les numéros de classe sont attribués aux dispositifs (301, 302) par un superviseur de réseau domestique.

16. Système suivant l'une quelconque des revendications 10 à 14, dans lequel les numéros de classe sont attribués aux dispositifs (301, 302) par un fabricant de dispositif.

17. Système suivant l'une quelconque des revendications 10 à 16, dans lequel il peut être attribué des numéros de classe différents à différents sous-dispositifs contenus dans l'un ou l'autre du dispositif de distribution (301) et du dispositif de réception (302).

18. Système suivant l'une quelconque des revendications 10 à 17, dans lequel les informations à distribuer d'un dispositif de distribution (301) au dispositif de réception (302) sont dotées d'un numéro de classe en filigrane, le numéro de classe en filigrane spécifiant le numéro de classe le plus élevé que le dispositif de réception (302) peut avoir tout en étant encore autorisé à recevoir les informations.
